# EUROPÄISCHE PATENTSCHRIFT

(11) **EP 0 460 371 B1**
(45) Veröffentlichungstag und Bekanntmachung des Hinweises auf die Patenterteilung: **21.12.1994**
(21) Anmeldenummer: 91105335.3
(22) Anmeldetag: 04.04.1991
(51) Int. Cl.: B60T 17/22, F16D 66/02, F16D 65/60

(54) **Bremsbetätigungseinrichtung mit einer Einrichtung zum Nachstellen einer Bremse**
Brake actuating device with brake adjusting means
Dispositif de commande de frein à dispositif pour ajuster un frein

(30) Priorität: 05.06.1990 DE 4017953
(43) Veröffentlichungstag der Anmeldung: 11.12.1991
(73) Patentinhaber: WABCO GmbH, 30453 Hannover (DE)
(72) Erfinder: Frania, Josef, W-3000 Hannover (DE)
(74) Vertreter: Schrödter, Manfred, Dipl.-Ing.

(56) Entgegenhaltungen:
- EP-A- 0 030 766
- EP-A- 0 370 173
- DE-A- 1 600 223
- DE-A- 3 343 885
- DE-B- 1 480 038
- DE-B- 2 116 121

## Beschreibung

Die Erfindung betrifft eine Bremsbetätigungseinrichtung mit einer Einrichtung zum Nachstellen einer Bremse, insbesondere einer Fahrzeugbremse, gemäß dem Oberbegriff des Patentanspruchs 1.

Eine derartige Einrichtung ist durch die DE-PS 1 480 038 vorbekannt. Die vorbekannte Einrichtung weist eine Nachstelleinrichtung auf, mit der Teile eines Bremsgestänges, nämlich eine Bremswelle und ein darauf angeordneter Bremshebel gegeneinander verstellbar sind. Die Verstellung dient einer kontinuierlichen Nachjustierung des Bremsgestänges im Sinne einer Aufrechterhaltung eines vorgegebenen Bremslüftspiels. Diese Nachjustierung soll ein gleichbleibendes Ansprechverhalten der Bremsen bzw. Bremsverhalten gewährleisten, was nicht zuletzt aus Gründen der Fahrsicherheit Gegenstand entsprechender gesetzlicher Regelungen ist.

Verschleiß oder Defekte der Nachstelleinrichtung und deren Betätigungsmechanismus können jedoch ein fehlerhaftes Nachjustieren bewirken, mit der Folge, daß das durch den Bremsentyp vorgegebene Bremslüftspiel im Verlaufe des Fahrbetriebes nicht mehr aufrecht erhalten bleibt und dann nicht mehr dem tatsächlichen Bremsbelagverschleiß entspricht. Bei der vorbekannten Einrichtung ist eine fehlerhafte Nachjustierung oder das gänzliche Ausbleiben einer solchen nur durch einen sich verändernden Bremsbetätigungshub oder ein Nachlassen der Bremswirkung erkennbar. Diese Veränderung des Bremslüftspiels vollzieht sich jedoch nur allmählich und gewöhnlich über einen längeren Zeitabschnitt und ist daher anfänglich kaum wahrnehmbar.

Aus Sicherheitsgründen besteht daher das Bedürfnis, dem Betreiber die Gewißheit über ein einwandfreies Funktionieren der Bremsbetätigungseinrichtung der eingangs genannten Art zu erhalten, indem ihm ein gleichbleibendes Ansprechverhalten der Bremsen bzw. Bremsverhalten angezeigt wird.

Der Erfindung liegt die Aufgabe zugrunde, eine Bremsbetätigungseinrichtung der eingangs erwähnten Art mit einfachen Mitteln so zu verbessern, daß deren tatsächlich vorhandenes Bremslüftspiel erfaßbar ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung läßt sich kostengünstig unter Verwendung eines handelsüblichen fühlergesteuerten Wegsensors, wie er beispielsweise in der DE 33 43 885 A1 beschrieben ist, ausführen.

Die Erfindung eröffnet die Möglichkeit, den Zustand bzw. das Betriebsverhalten der Bremseinrichtung in ein elektronisches Diagnosesystem, sei es werkstattgebunden, sei es im Falle eines Fahrzeugs bordeigen, einzubeziehen. Weist die Bremseinrichtung eine selbsttätige Nachstelleinrichtung auf, so deutet z.B. eine Zunahme der Schwenkbewegung des Bremshebels auf einen Defekt der Nachstelleinrichtung hin. Im Falle einer Bremseinrichtung ohne Nachstelleinrichtung gibt hingegen die Schwenkbewegung des Bremshebels einen Hinweis auf den Verschleißzustand des Bremsbelags. In beiden Fällen ermöglicht die Erfindung die Feststellung, ob auch unter ungünstigen Betriebsbedingungen, z.B. bei heißer Bremse das Bremslüftspiel noch innerhalb einer zulässigen Toleranzbreite liegt.

Die Erfindung läßt sich mit jedem geeigneten Bremshebel, unabhängig von der Art des auf ihn wirkenden Betätigungsmechanismus ausführen. Nur beispielhaft seien hierfür mit Druckluft oder Bremsflüssigkeit betätigbare Bremszylinder genannt.

Die Erfindung erhöht die aktive Sicherheit der zugehörigen Bremsanlage, was insbesondere bei Fahrzeugen vorteilhaft ist. Dies gilt insbesondere, wenn die Bremseinrichtung in der Regel mit einer selbsttätigen Nachstelleinrichtung versehen ist und wegen der Einbauverhältnisse eine visuelle Überwachung der Nachstelleinrichtung kaum möglich ist.

Ein weiterer Vorteil der Erfindung besteht in ihrer weiteren Ausbildung durch eine Integration der Überwachungseinrichtung in den Bremshebel und einer dadurch erreichten Kapselung funktionsbestimmender Teile gegen am Fahrzeug herrschende Umwelteinflüsse.

Weitere Vorteile der Erfindung werden in der nachstehenden Erläuterung anhand eines in der Zeichnung dargestellten Ausführungsbeispiels beschrieben.

Aus der DE-A-1 600 223 ist eine Anzeigevorrichtung für einen selbsttätig nachstellenden Bremshebel bekannt.

Diese bekannte Anzeigevorrichtung besteht aus einer am Bremshebel und an der Bremswelle angeordneten elektrischen Kontaktanordnung, die an einen mit einem Anzeigegerät verbundenen Stromkreis angeschlossen ist.

Die Anzeigevorrichtung arbeitet in der Weise, daß die Kontaktanordnung das Anzeigegerät einschaltet, sobald der Bremshebel gegenüber der Bremswelle um einen dem maximal zulässigen Verschleiß der Bremsbeläge entsprechenden Drehwinkel nachgestellt wurde.

Da diese bekannte Anzeigevorrichtung nur eine Kontaktanordnung mit den Schaltzuständen "EIN" - "AUS" enthält, können mittels der Anzeigevorrichtung auch nur zwei Zustände des Bremsbelags erkannt werden, nämlich "Bremsbeläge weisen mehr als die geforderte Mindeststärke auf" oder "Bremsbelagstärke bis auf das zulässige Mindestmaß verschlissen".

Mit dieser bekannten Anzeigevorrichtung kann ein an der Nachstelleinrichtung oder deren Betätigungsmechanismus auftretender Verschleiß oder ein an der Nachstelleinrichtung oder deren Betätigungsmechanismus auftretender Defekt, der zu einem fehlerhaften Nachjustieren des Bremsgestänges führen würde, nicht erkannt werden. Ein fehlerhaftes Nachjustieren des Bremsgestänges hat jedoch zur Folge, daß das durch den Bremsentyp vorgegebene Bremslüftspiel im Verlaufe des Fahrbetriebes nicht mehr aufrecht erhalten werden kann und deshalb dann nicht mehr dem tatsächlichen Bremsbelagverschleiß entspricht.

Mit dieser bekannten Anzeigevorrichtung ist es nicht möglich, das tatsächlich vorhandene Bremslüftspiel zu erfassen.

Die Erfindung wird anhand eines Ausführungsbeispiels, das in der Zeichnung dargestellt ist, näher erläutert.

Es zeigen
- **Fig.1**: eine Bremsbetätigungseinrichtung mit einer Einrichtung zur Überwachung des Bremsbetätigungshubes,
- **Fig.2**: eine Einzelheit der Einrichtung gemäß Fig.1,
- **Fig.3**: eine Einzelheit der Einrichtung gemäß Fig.1.

Die dargestellte Einrichtung zur Überwachung des Bremsbetätigungshubes ist dafür vorgesehen, einen vorgegebenen annähernd konstanten Hub einer Bremsbetätigungseinrichtung anzuzeigen.

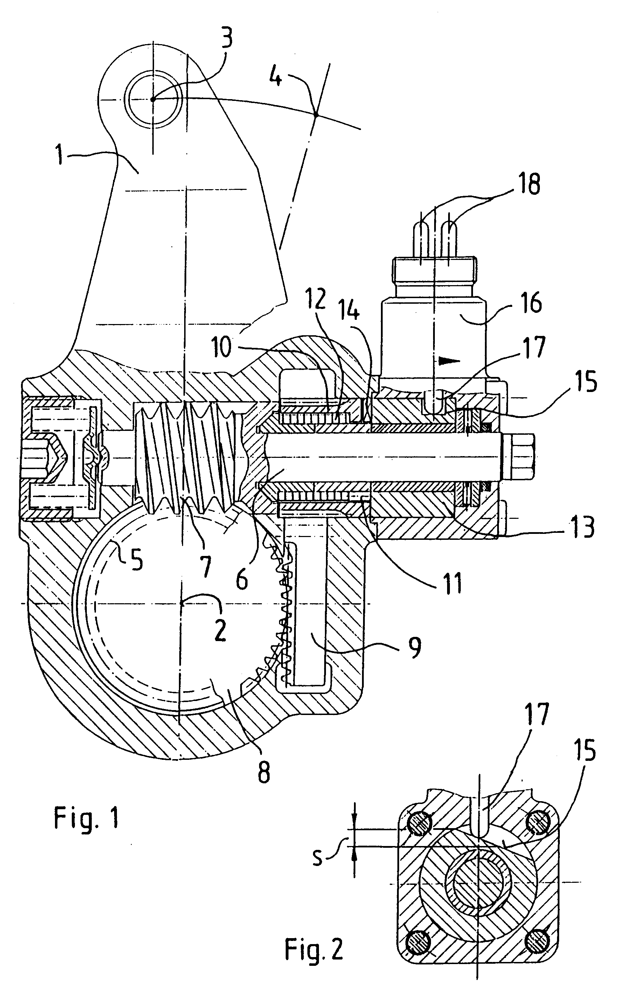

Die Bremsbetätigungseinrichtung umfaßt gemäß Fig.1 einen Bremshebel (1), der auf einer Bremsbetätigungswelle (2) angeordnet ist, sowie ein nicht dargestelltes Betätigungsorgan, wie z.B. einen durch ein Druckmittel betätigbaren Bremszylinder, mit dem der Bremshebel (1) mit der Bremsbetätigungswelle (2) um die Drehachse der Bremsbetätigungswelle (2) verschwenkbar ist. Der bei der Verschwenkung vom Bremshebel (1) durchfahrene Bremshebelausschlag zwischen einer vorgegebenen Anfangsstellung (3) und einer Endstellung (4) entspricht dem Durchfahren eines Lüftspiels der Bremselemente, wie z.B. Bremsbacken und Bremstrommel, bis zu deren Eingriff bei einer Bremsbetätigung.

Zwischen der Bremsbetätigungswelle (2) und dem Bremshebel (1) ist eine Nachstelleinrichtung (5, 7) in Form eines Getriebes mit einem Schneckenrad (5) und einer mit einer Schneckenwelle (6) drehfest verbundenen Schnecke (7) angeordnet. Um bei einem Verschleiß der Bremselemente zwischen diesen dennoch ein vorgegebenes Bremslüftspiel aufrechtzuerhalten, ist die Bremsbetätigungswelle (2) gegenüber dem Bremshebel (1), dem Verschleiß entsprechend, durch die Nachstelleinrichtung (5, 7) verstellbar. Diese Verstellung bewirkt, daß der maximale Bremshebelausschlag bei einer Bremsbetätigung zwischen der Anfangsstellung (3) und der Endstellung (4) nahezu unverändert bleibt. Eine Abweichung hiervon in vorgegebenen Grenzen soll letztlich nur durch eine gewisse Elastizität des Bremsgestänges und durch eine unterschiedliche Erwärmung der Bremstrommel gegeben sein.

Die Nachstelleinrichtung (5, 7) ist durch einen Antrieb (8, 9, 10) betätigbar, der aus einem um die Bremsbetätigungswelle (2) und relativ zum Bremshebel (1) drehbar angeordneten Zahnrad (8), einer mit dem Zahnrad (8) in Eingriff befindlichen Zahnstange (9) und einem mit der Zahnstange (9) in Eingriff befindlichen Ritzel (10) gebildet ist. Zwischen dem Antrieb (8, 9, 10) und der Nachstelleinrichtung (5, 7) ist eine durch Anschläge (11) begrenzte Leerwegeinrichtung und eine Einwegkupplung (12) nach Art eines Freilaufs angeordnet.

Das Zahnrad (8) ist mit einem relativ zum Bremshebel (1) angeordneten Bezugspunkt verbunden, derart, daß bei einem Bremshebelausschlag durch eine Relativbewegung des Bremshebels (1) zum Zahnrad (8) die Zahnstange (9) und das Ritzel (10) in eine Antriebsbewegung relativ zu der Nachstelleinrichtung (5, 7) versetzt werden, wobei jedoch bei einer Drehbewegung des Ritzels (10) innerhalb der Anschläge (11) der Leerwegeinrichtung die Antriebsbewegung nicht über die Einwegkupplung (12) auf die Nachstelleinrichtung (5, 7) übertragen wird. Die Antriebsbewegung von Zahnstange (9) und Ritzel (10), bei der sich das Ritzel (10) zwischen den Anschlägen (11) der Leerwegeinrichtung bewegt, entspricht dem Bremshebelausschlag zwischen der Anfangsstellung (3) und der Endstellung (4), der einem vorgegebenen Bremslüftspiel zwischen den Bremsbacken und der Bremstrommel entsprechen soll.

Ein Bremshebel mit einer automatische Nachstellung der Bremsbetätigungswelle, ähnlich dem der vorstehend beschriebenen Einrichtung, ist auch durch die EP 0 030 766 A1 bekannt. Anstelle der Zahnstange (9) und dem Ritzel (10) ist hier der Antrieb der Nachstelleinrichtung durch ein Zahnrad, eine mit dem Zahnrad drehfest verbundenen Schnecke und ein von der Schnecke antreibbares Schneckenrad gebildet. Dieser Antrieb der Nachstelleinrichtung wird ebenfalls bei einem Bremshebelausschlag stets zwischen Endanschlägen einer Leerwegeinrichtung in zwei Richtungen bewegt.

Es ist auch denkbar, eine andere Art des Antriebes vorzusehen, wo z.B. anstelle des Ritzels (10) eine Hülse vorhanden wäre, die über die Schneckenwelle (6) hinausragend mit einem relativ zum Bremshebel (1) festen Bezugspunkt, z.B. über eine mit einer solchen Hülse schwenkbare Klaue und einem relativ zum Bremshebel (1) feststehenden Bolzen, den Antrieb der Nachstelleinrichtung in der Art einer Schleppverbindung bilden würde. In diesem Falle würde das Zahnrad (8), die Zahnstange (9) und das Ritzel (10) entfallen. Auch ein solcher Antrieb würde bei einem Bremshebelausschlag stets zwischen Endanschlägen einer Leerwegeinrichtung hin- und herbewegt.

Bei einem Defekt der vorstehend beschriebenen Nachstelleinrichtungen, d.h., wenn der durch den Fahrbetrieb auftetende Verschleiß der Bremselemente nicht durch ein Verstellen der Bremsbetätigungswelle (2) relativ zum Bremshebel (1) kompensiert wird, stellt sich bei Bremsbetätigungen ein Bremshebelausschlag ein, der die Endstellung (4) überschreitet.

Die Fig.1 zeigt die Bremsbetätigungseinrichtung mit dem Bremshebel (1) in Kombination mit einer Einrichtung zur Überwachung des Bremshebelausschlages wie sie beispielsweise in der DE 33 43 885 A1 beschrieben ist. Auf der Schneckenwelle (6) ist eine Hülse (13) drehbar gelagert und mit dem Ritzel (10) einstückig, oder durch eine Steckverbindung (14) drehfest, verbunden. Die so als Fortsatz (13) des Ritzes (10) ausgebildete Hülse (13) folgt der vor- und rückläufigen Antriebsbewegung des Ritzels (10) bei einem Bremshebelausschlag.

Die Hülse (13) weist eine an ihrem Umfang sich erstreckende Vertiefung (15) auf, die als Steuerkurve (15) wirkt und der Erzeugung eines Meßweges (s) dient. Anstelle der Vertiefung (15) kann auch eine an dem Umfang der Hülse (13) sich erstreckenden Erhöhung ebenfalls als Steuerkurve (15) zur Erzeugung des Meßweges (s) dienen.

Mit dem Bremshebel (1) fest verbunden und die Hülse (13) umgreifend, ist die Einrichtung zur Überwachung des Bremshebelausschlages in der Art eines Signalgebers (16) angeordnet, der sich in an sich bekannter Weise elektrisch, mit Spule und Kern, ausgebildet ist. Der Kern der Spule ist durch einen Wegsensor (17) in der Art eines Taststiftes (17) gebildet, der mit der Steuerkurve (15) der Hülse (13) im Eingriff befindlich ist. Die mittels des Signalgebers (16) erzeugbaren elektrischen Signale sind über elektrische Kontakte (18) einer Anzeige- bzw. Auswerteeinrichtung zuführbar.

Mit der Schwenkbewegung der Steuerkurve (15), entsprechend der Bewegung des Ritzels (10) bzw. der Hülse (13) wird der dem Bremslüftspiel entsprechende Meßweg (s) erzeugt, der von dem Wegsensor (17) abgetastet und durch eine Längsbewegung dem Signalgeber (16) mitgeteilt wird.

Bei einem Defekt der Bremsbetätigungseinrichtung, wie z.B. einem nicht exakten Funktionieren der Nachstelleinrichtung (5, 7), der einen über die Endstellung (4) hinausragenden Bremshebelausschlag zur Folge hat, wird die Steuerkurve (15) relativ zum vergrößerten Bremshebelausschlag über ihre durch die Endstellung (4) des Bremshebels (1) vorgegebene Endstellung hinaus bewegt. Der Wegsensor (17) wird dann durch die Steuerkurve (15) in eine dem vergrößerten Bremshebelausschlag entsprechende Position relativ zum Signalgeber (16) bewegt die an den elektrischen Anschlüssen (18) des Signalgebers (16) als verändertes elektrisches Signal meßbar bzw. abgreifbar ist.

Die Mittel zur Auswertung des elektrischen Signals können so ausgebildet sein, daß diese entweder den gesamten Bremshebelausschlag von der Anfangsstellung (3) über die Endstellung (4) hinausgehend zu einer Anzeige verwerten, oder nur dann eine Anzeige erfolgt, wenn der Bremshebel (1) über die Endstellung (4) hinausgehend bewegt wird.

Der Meßweg (s) kann auch von einen anderen Teil des Antriebes, z.B. der Zahnstange (9) erzeugt werden, da diese mit dem Ritzel (10) in Eingriff stehend auch eine entsprechende Relativbewegung zu der Schwenkbewegung des Bremshebels (1) ausführt. Die den Meßweg (s) erzeugende Steuerkurve wäre dann in Form einer in Längsrichtung der Zahnstange (9) sich erstreckende Erhebung oder Vertiefung ausgebildet und durch einen entsprechend angeordneten Wegsensor (17) abtastbar. Schließlich wäre auch die Längsbewegung der Zahnstange (9) selbst zur Erzeugung des Meßweges (s) nutzbar, in dem der Wegsensor (17) stirnseitig an der Zahnstange (9) angeordnet, dessen Längsbewegung abtasten würde.

Die Wahl der aufgezeigten Mittel zur Erzeugung des Meßweges (s) bedingt eine jeweils dem Erfordernis angepaßte Anbringung des Signalgebers (16). Unter Berücksichtigung der an dem jeweiligen Fahrzeugtyp herrschenden Einbauverhältnisse sind daher die einen oder anderen Mittel der Signalerzeugung vorzuziehen.

Es ist auch denkbar, die Erzeugung des Meßweges (s) und dessen Sensierung direkt am Bremshebel vorzunehmen. Eine solche Sensierung könnte z.B. durch eine entsprechende Formgebung, ebenfalls in der Art einer Steuerkurve, an geeigneter Stelle des Bremshebels (1) erfolgen. Hierbei müßte der Wegsensor (17) mit dem Signalgeber (16) so in der Nähe zum Bremshebel (1) angebracht sein, daß dieser sich relativ zum Wegsensor (17) bewegen und diese Bewegung von dem Wegsensor (17) erkannt werden kann.

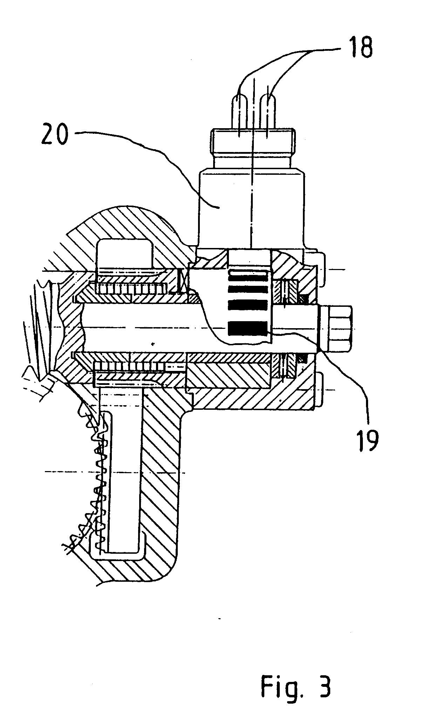

Anstelle der Erzeugung des Meßweges (s) mittels der beschriebenen Steuerkurven, können auch magnetfelderzeugende oder magnetfeldverändernde Mittel (19), wie z.B. Permanentmagnete oder ferromagnetische Elemente (19) Verwendung finden, deren Bewegung relativ zu einem Signalgeber (20) mit einam als Magnetfeldsensor (21) ausgebildeten Wegsensor (21) als Meßweg (s) registrierbar ist. (Fig.3)

Die Koppelung des Signalgebers (16, 20) mit dem Antrieb (8, 9, 10) der Nachstelleinrichtung (5, 7) ermöglicht eine Kapselung der an der Sensierung und Signalgebung beteiligten Bauteile am oder im Bremshebel (1). Hierdurch ist eine Justierung, bzw. Nachjustierung, des Signalgebers (16, 20) zum Bremshebel (1) am Fahrzeug, bei Neuinstallation oder während des Fahrbetriebes, nicht erforderlich. Die gekapselte Bauweise, die eine Abschirmung funktionsbestimmender Bauteile gegen am Fahrzeug herrschende Umweltbedingungen ermöglicht, hat eine vorteilhafte Auswirkung auf die Funktionssicherheit und die Lebensdauer dieser Einrichtung.

Die elektrischen Signale an den elektrischen Anschlüssen (18) des Signalgebers (16, 20) können zur Steuerung einer optischen oder akustischen Anzeigeeinrichtung im Fahrerhaus, oder zur Weiterleitung an eine elektrische Auswerteeinrichtung eines stationären Diagnosecenters, z.B. anläßlich einer Fahrzeuginspektion, vorteilhaft genutzt werden.

## Patentansprüche

1. Bremsbetätigungseinrichtung mit einer Einrichtung zum Nachstellen einer Bremse, insbesondere einer Fahrzeugbremse, mit folgenden Merkmalen:
a) es ist ein Bremshebel (1) vorgesehen, der zusammen mit einer Bremswelle (2) um deren Drehachse eine Schwenkbewegung ausführt, die zur Betätigung einer Bremse, im Sinne des Überwindens eines Bremslüftspiels zwecks Annäherung eines Bremsbelages an eine Bremstrommel, dient;
b) zwischen dem Bremshebel (1) und der Bremswelle (2) ist eine Nachstelleinrichtung (5, 7) vorgesehen, mit der die Bremswelle (2) gegenüber dem Bremshebel (1) um die Drehachse der Bremswelle (2), im Sinne der Aufrechterhaltung des Bremslüftspiels bei Verschleiß des Bremsbelages, verstellbar ist,
gekennzeichnet durch die folgenden Merkmale:
c) es ist ein Signalgeber (16, 20) mit einem Wegsensor (17, 21) vorgesehen, der zum Abtasten eines dem Überwinden des Bremslüftspiels entsprechenden Meßweges (s) dient und in Abhängigkeit von dem abgetasteten Meßweg (s) ein Signal erzeugt;
d) zur Erzeugung des Meßweges (s) dient die Schwenkbewegung des Bremshebels (1) zum Überwinden des Bremslüftspiels.

2. Einrichtung nach Anspruch 1, mit folgenden Merkmalen:
a) es ist eine selbsttätige Nachstelleinrichtung mit einem Antrieb vorgesehen, der zur Betätigung der Nachstelleinrichtung dient;
b) der Antrieb führt in Abhängigkeit von der Schwenkbewegung des Bremshebels zu diesem eine Relativbewegung aus,
gekennzeichnet durch folgendes Merkmal:
c) der Meßweg (s) wird von mindestens einem die Relativbewegung des Antriebes (8, 9, 10) ausführenden Bauteil des Antriebes (8, 9, 10) erzeugt.

3. Einrichtung nach Anspruch 2, dadurch gekennzeichnet, daß das der Erzeugung des Meßweges (s) dienende Bauteil (10) des Antriebes (8, 9, 10) aus einem eine Drehbewegung relativ zu dem Bremshebel (1) ausführenden Ritzels (10) gebildet ist.

4. Einrichtung nach Anspruch 2, dadurch gekennzeichnet, daß das der Erzeugung des Meßweges (s) dienende Bauteil (9) des Antriebes (8, 9, 10) aus einer eine Längsbewegung relativ zu dem Bremshebel (1) ausführenden Zahnstange (9) gebildet ist.

5. Einrichtung nach Anspruch 3, gekennzeichnet durch folgende Merkmale:
a) das Ritzel (10) ist in dem Bremshebel (1) angeordnet und weist einen einstückig bzw. drehfest mit dem Ritzel (10) verbundenen Fortsatz (13) auf, der sich außerhalb des Bremshebels (1) erstreckt;
b) der Fortsatz (13) weist eine an seinem Umfang sich erstreckende Vertiefung (15) in der Art einer Steuerkurve auf, die der Erzeugung des Meßweges (s) dient.

6. Einrichtung nach Anspruch 5, dadurch gekennzeichnet, daß der Fortsatz (13) ein an seinem Umfang sich erstreckende Erhöhung in der Art einer Steuerkurve (15) aufweist, die der Erzeugung des Meßweges (s) dient.

7. Einrichtung nach den Ansprüchen 5 oder 6, dadurch gekennzeichnet, daß der Wegsensor (17) in der Art eines Taststiftes (17) ausgebildet ist, der sich mit der am Umfang des Fortsatzes (13) in Form einer Vertiefung oder Erhöhung erstreckenden Steuerkurve (15) im Eingriff befindet.

8. Einrichtung nach Anspruch 4, dadurch gekennzeichnet, daß die Zahnstange (9) des Antriebes (9, 10) eine in ihrer Längsrichtung sich erstreckende Erhebung oder Vertiefung aufweist, die der Erzeugung des Meßweges (s) dient und die mit einem Wegsensor zwecks Erregung eines Signalgebers in Eingriff befindlich ist.

9. Einrichtung nach den Ansprüchen 2, 3 oder 4, dadurch gekennzeichnet, daß die der Erzeugung des Meßweges (s) dienenden Bauteile (9, 10) des Antriebes (8, 9, 10) mit magnetfelderzeugenden oder magnetfeldverändernden Mitteln (19) versehen sind, deren Bewegung relativ zu einem Magnetfeldsensor (20) als Meßweg (s) registrierbar ist.

## Claims

1. A brake operating arrangement having a device for adjusting a brake, in particular a vehicle brake, having the following features:
a) a brake lever (1) is provided, which together with a brake shaft (2) executes a pivoting movement about the axis of rotation of the brake shaft, which pivoting movement serves to actuate a brake in order to take up a brake release clearance for the purpose of bringing a brake lining nearer to a brake drum;
b) between the brake lever (1) and the brake shaft (2) there is provided an adjusting device (5, 7) with which the brake shaft (2) is displaceable relative to the brake lever (1) about the axis of rotation of the brake shaft (2), in order to maintain the brake release clearance as the brake lining wears,
characterized by the following features:
c) a signal generator (16, 20) with a displacement sensor (17, 21) is provided, which serves for sensing a measurement displacement (s) corresponding to the taking up of the brake release clearance and generates a signal in dependence on the sensed measurement displacement (s);
d) the pivoting movement of the brake lever (1) for taking up the brake release clearance serves for generating the measurement displacement (s).

2. An arrangement according to claim 1, having the following features:
a) an automatic adjusting device is provided, having a drive means serving for actuating the adjusting device;
b) in dependence on the pivoting movement of the brake lever the drive means performs a movement relative thereto,
characterized by the following feature:
c) the measurement displacement (s) is generated by at least one component of the drive means (8, 9, 10) performing the relative movement of the drive means (8, 9, 10).

3. An arrangement according to claim 2, characterized in that the component (10) of the drive means (8, 9, 10) generating the measurement displacement (s) is constituted by a pinion (10) performing a rotary movement relative to the brake lever (1).

4. An arrangement according to claim 2, characterized in that the component (9) of the drive means (8, 9, 10) generating the measurement displacement (s) is constituted by a rack (9) performing a longitudinal movement relative to the brake lever (1).

5. An arrangement according to claim 3, characterized by the following features:
a) the pinion (10) is arranged in the brake lever (1) and has an extension (13) joined in one piece with or to rotate with the pinion (10), which extension extends beyond the brake lever (1);
b) the extension (13) has a depression (15) running on its circumference as a control cam, which serves to produce the measurement displacement (s).

6. An arrangement according to claim 5, characterized in that the extension (13) has an enlargement running on its circumference as a control cam (15), which serves to produce the measurement displacement (s).

7. An arrangement according to claim 5 or 6, characterized in that the displacement sensor (17) is in the form of a follower pin (17) which engages with the control cam (15) running in the form of a depression or enlargement on the circumference of the extension (13).

8. An arrangement according to claim 4, characterized in that the rack (9) of the drive means (9, 10) has an enlargement or depression running in its longitudinal direction which serves to produce the measurement displacement (s) and which is located in engagement with a displacement sensor for the purpose of energizing a signal generator.

9. An arrangement according to claim 2, 3 or 4, characterized in that the components (9, 10) of the drive means (8, 9, 10) serving to produce the measurement displacement (s) are provided with means (19) for generating a magnetic field or changing a magnetic field, the movement of which means relative to a magnetic field sensor (20) is arranged to be recorded as the measurement displacement (s).

## Revendications

1. Dispositif de commande de frein comportant un dispositif pour le rattrapage d'usure d'un frein, en particulier d'un frein de véhicule automobile, présentant les caractéristiques suivantes :
a) il est prévu un levier de frein (1) qui effectue ensemble avec un arbre de frein (2) un mouvement de basculement autour de l'axe de rotation de ce dernier, mouvement qui sert à l'actionnement d'un frein, dans le sens de l'annulation d'un jeu des freins pour le rapprochement d'une garniture de frein vers un tambour de frein ;
b) il est prévu entre le levier de frein (1) et l'arbre de frein (2) un dispositif de rattrapage d'usure (5, 7) grâce auquel l'arbre de frein (2) peut être réglé par rapport au levier de frein (1) autour de l'axe de rotation de l'arbre de frein (2), dans le sens d'un maintien du jeu des freins lors d'une usure de la garniture de frein,
caractérisé en ce que
c) il est prévu un émetteur de signaux (16, 20) comportant un détecteur de course (17, 21) qui sert à la détection d'une course de mesure (s) qui correspond à l'annulation du jeu des freins, et qui produit un signal en dépendance de la course de mesure (s) palpée;
d) le mouvement de basculement du levier de frein (1) pour annuler le jeu des freins sert pour la production de la course de mesure (s).

2. Dispositif selon la revendication 1, présentant les caractéristiques suivantes :
a) il est prévu un dispositif de rattrapage d'usure automatique comportant un entraînement qui sert à l'actionnement du dispositif de rattrapage d'usure ;
b) l'entraînement effectue en dépendance du mouvement de basculement du levier de frein un mouvement relatif par rapport à celui-ci,
caractérisé en ce que
c) la course de mesure (s) est produite par au moins un composant de l'entraînement (8, 9, 10), qui effectue le mouvement relatif de l'entraînement (8, 9, 10).

3. Dispositif selon la revendication 2, caractérisé en ce que le composant (10) de l'entraînement (8, 9, 10) qui sert à la production de la course de mesure (s) est formé par un pignon (10) qui effectue un mouvement de rotation par rapport au levier de frein (1).

4. Dispositif selon la revendication 2, caractérisé en ce que le composant (9) de l'entraînement (8, 9, 10) qui sert à la production de la course de mesure (s) est formé par une crémaillère (9) qui effectue un mouvement longitudinal par rapport au levier de frein (1).

5. Dispositif selon la revendication 3, caractérisé en ce que
a) le pignon (10) est agencé dans le levier de frein (1) et présente une prolongation (13) en une seule pièce avec le pignon (10) ou reliée solidairement en rotation à ce dernier, prolongation qui s'étend à l'extérieur du levier de frein (1);
b) la prolongation (13) présente un creux (15) qui s'étend sur sa périphérie à la manière d'une came de commande qui sert à la production de la course de mesure (s).

6. Dispositif selon la revendication 5, caractérisé en ce que la prolongation (13) présente une bosse qui s'étend sur sa périphérie à la manière d'une came de commande (15) qui sert à production de la course de mesure (s).

7. Dispositif selon l'une ou l'autre des revendications 5 et 6, caractérisé en ce que le détecteur de course (17) est réalisé à la manière d'un palpeur (17) qui est en engagement avec la came de commande (15) qui s'étend sur la périphérie de la prolongation (13) en forme d'un creux ou d'une bosse.

8. Dispositif selon la revendication 4, caractérisé en ce que la crémaillère (9) de l'entraînement (8, 9, 10) présente une bosse ou un creux s'étendant dans sa direction longitudinale, qui sert à la production de la course de mesure (s) et qui est en engagement avec un détecteur de course afin d'exciter un émetteur de signaux.

9. Dispositif selon l'une quelconque des revendications 2, 3, et 4, caractérisé en ce que les composants (9, 10) de l'entraînement (8, 9, 10) qui servent à la production de la course de mesure (s) sont pourvus de moyens (19) qui produisent un champ magnétique ou qui modifient un champ magnétique, dont le mouvement par rapport à un détecteur de champ magnétique (20) peut être enregistré en tant que course de mesure (s).
